# EUROPÄISCHE PATENTANMELDUNG

(11) **EP 0 773 085 A1**
(43) Veröffentlichungstag der Anmeldung: **14.05.1997**
(21) Anmeldenummer: 96112072.2
(22) Anmeldetag: 26.07.1996
(51) Int. Cl.: B23K 26/00, B23K 26/12

(54) **Vorrichtung zum Spannen und Laserstrahlschweissen von Dünnblechen**

(30) Priorität: 10.11.1995 DE 19541899
(71) Anmelder: Drauz Ingenieurbetrieb GmbH, 09337 Hohenstein-Ernstthal (DE)
(72) Erfinder: Stein, Hans, 09358 Wüstenbrand (DE); Wilkerling, Udo, 09350 Lichtenstein (DE)
(74) Vertreter: Illing, Ralf, Dipl.-Jur. Ing.

(57) **Zusammenfassung**

Die Spanneinrichtung soll Dünnbleche gleicher oder unterschiedlicher Dicken mit hoher Lagegenauigkeit stumpf aneinander festhalten und die dabei auftretenden Verformungskräfte auf die Führungen des Laserstrahlschweißgerätes übertragen. Weiterhin soll die Spanneinrichtung die Schweißfuge in Längsrichtung beiderseits umschließen und lichtdicht verschließbar gestalten.
Durch zwei parallel zueinander angeordnete, feststehende, miteinander verbundene Gegenhalterwangen und darunter reihenförmig angeordnete Druckmittelzylinder mit Spannbacken werden die Bleche eben gespannt. Die auf den Oberkanten der Gegenhalterwangen befestigten Führungen übertragen die Verformungsabweichungen auf die Laserstrahlschweißoptik. Der Hohlraum zwischen den Gegenhalterwangen ist durch Abdeckungen gut lichtdicht zu verschließen.
Die Spannvorrichtung dient zum Verbinden von Dünnblechen für Karosserien von Kraftfahrzeugen.

## Beschreibung

Die Erfindung betrifft eine Vorrichtung zum Spannen und Laserstrahlschweißen von unterschiedlich dicken oder gleich dicken Dünnblechen, insbesondere für Karosserien von Kraftfahrzeugen mit einer an der Vorrichtung zum Spannen parallel zur Schweißfuge befestigten Führung, auf der ein oder mehrere Laserstrahlschweißgeräte verfahrbar gelagert sind.

Es ist eine Vorrichtung zum Spannen und Schweißen von Blechen bekannt, die aus einem Rahmen besteht, an dem ein Ausleger verfahrbar gelagert ist. An seinem unteren Ende ist der Ausleger mit einem Träger verbunden, der mehrere schwenkbare Arme zum Spannen eines Blechteiles besitzt. An dem Träger ist mindestens eine Führung befestigt, auf der ein Schweißgerät verfahrbar gelagert ist (DE 35 19 696 A1). Wird als Schweißgerät ein Laserstrahlschweißgerät verwendet, so bedarf es einer vollständigen Einhausung des Rahmens und einer Absaugeinrichtung für die beim Schweißen entstehenden Rauch- und anderer Gase. Dünnbleche sind mit dieser Vorrichtung lagegenau in einer Ebene liegend nicht zu verbinden. Obwohl die Führung für die Bewegung des Schweißgerätes am Träger befestigt ist, kann dadurch keine ständige parallele Lage der Führung zur Schweißfuge erreicht werden. Der Träger hat durch die Zwischenschaltung der Spannarme keinen formschlüssigen Kontakt zum Auflageblech. Dadurch kann keine einwandfreie Schweißnaht erreicht werden. Die Aufwendungen für die Einhausung sind erheblich. Das stumpfe Aneinanderschweißen beider Bleche zum Beispiel durch ein entsprechendes Schwenken des Trägers ist ausgeschlossen, da für das Auflageblech keine Spanneinrichtung vorhanden ist.

Die Aufgabe der Erfindung besteht darin, eine Vorrichtung zum Spannen und Laserstrahlschweißen von Dünnblechen, wie im Oberbegriff des Hauptanspruches näher gekennzeichnet, zu schaffen, deren Spanneinrichtung so ausgeführt ist, daß sie Dünnbleche gleicher oder unterschiedlicher Dicken mit hoher Lagegenauigkeit stumpf zueinander festhält und die dabei auftretenden Verformungskräfte auf die Führungen des Laserstrahlschweißgerätes überträgt. Weiterhin soll die Spanneinrichtung die Schweißfuge in Längsrichtung beiderseits umschließen. Der so gebildete Raum soll lichtdicht verschließbar und mit einfachen Mitteln absaugbar sein.

Die Aufgabe der Erfindung wird durch die Merkmale des Kennzeichens des Patentanspruches 1 gelöst. Die Kennzeichen der Unteransprüche gestalten diese Lösung vorteilhaft in verschiedenen Einzelheiten aus.

Die Verwendung zweier fest angeordneter Gegenhalterwangen und von unten dagegen wirkender Spannbacken ergibt eine genau in einer Ebene liegende Oberfläche beider zu verbindenden Bleche. Die durch die Spannkräfte erfolgende Durchbiegung der Gegenhalterwangen wird direkt auf die Führungen der Laserstrahlschweißgeräte übertragen. Dadurch besteht an jeder Stelle der Gegenhalterwangen ein konstanter Abstand zwischen Schweißfuge und Führungen. Der Raum zwischen den Gegenhalterwangen umschließt vollkommen den Schweißvorgang und ist nach oben und zu den Seiten leicht zu verschließen. Somit bedarf es keiner zusätzlichen Einhausung der Vorrichtung. Die geringe Größe des Raumes zwischen den Gegenhalterwangen erlaubt einfache Absaugdüsen für die Rauch- und anderen Gase unmittelbar am Entstehungsort.

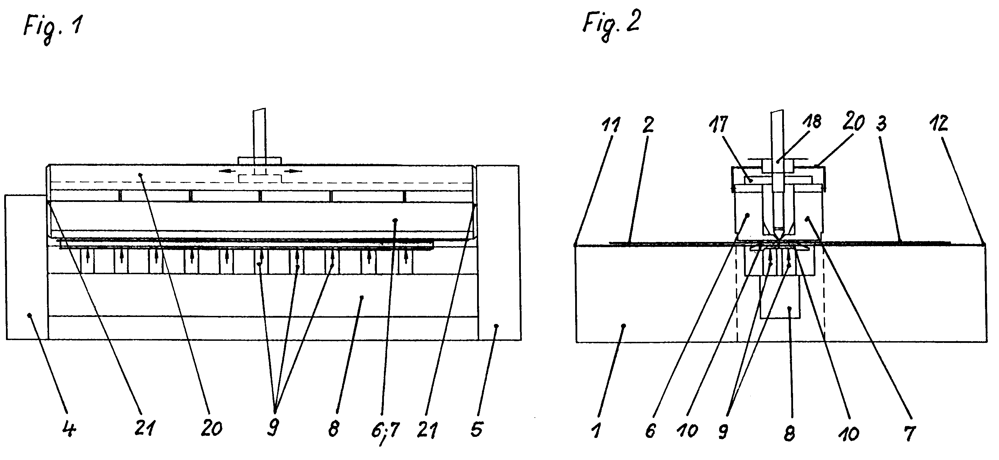

Die Erfindung wird an einem Ausführungsbeispiel erläutert. In den Zeichnungen zeigen
Fig. 1 eine Vorderansicht der Vorrichtung,
Fig. 2 eine Seitenansicht im Teilschnitt,

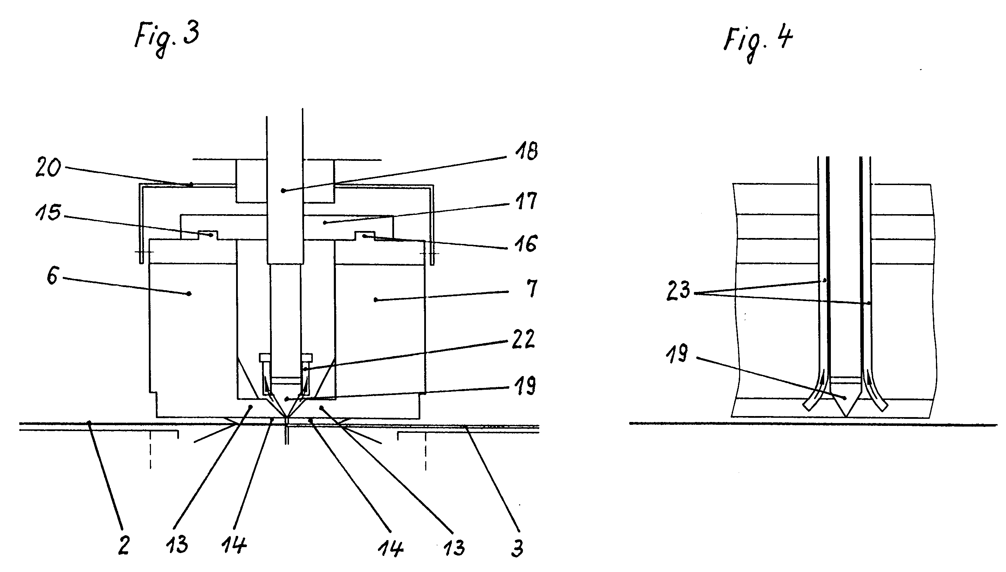

Fig. 3 eine Anordnung der Absaugdüse,
Fig. 4 eine Ausbildung der Absaugdüse aus mehreren Rohren.

Ein Auflagetisch (1) für die zu verschweißenden Bleche (2;3) ist an beiden Seiten mit je einem Ständer (4;5) verbunden, die über die Tischoberfläche hinausragen. An den überstehenden freien Enden der Ständer (4;5) sind parallel zueinanderliegend zwei Gegenhalterwangen (6;7) in der Anordnung eines Portales befestigt. Die Tischfläche ist unterhalb der Gegenhalterwangen (6;7) unterbrochen. Dort ist an den Ständern (4;5) ein biegungssteifer Träger (8) befestigt, auf dessen nach oben zeigender Fläche im Abstand, in Längsrichtung nebeneinander, eine Anzahl paarweise angeordneter Druckmittelzylinder (9) angebracht sind, an deren Kolbenstangen bewegliche Spannbacken (10) gelagert sind. Die Anordnung ist so gewählt, daß die Oberfläche der Spannbacken (10) in der Ebene der Tischfläche liegt. Die Spannbacken (10) sind jeweils an ihren zu den freien Tischenden (11;12) zeigenden Seiten keilförmig abgeschrägt.

Jede der beiden Gegenhalterwangen (6;7) hat die Form eines langgestreckten Trägers mit einem hochkant angeordneten rechteckigen Querschnitt. Jede Gegenhalterwange (6;7) ist an ihrer unteren, zum Tisch (1) zeigenden Fläche mit einem L-förmigen Vorsprung (13) versehen, die aufeinander gerichtet sind und an ihren Enden keilförmig ausgebildet sind. An den Unterseiten dieser L-förmigen Vorsprünge (13) sind Spannschienen (14) leicht lösbar befestigt. Der Abstand ihrer zueinander zeigenden Kanten ist so gewählt, daß er wenig größer als die Breite der Schweißfuge ist. Die Spannschienen (14) sind mit Kammern (nicht dargestellt) versehen, die an ein Kühlmittelaggregat angeschlossen sind. Die von der Schweißfuge abgewandten Kanten der Spannschienen (14) sind keilförmig ausgebildet. Die Gegenhalterwangen (6;7) tragen auf ihren oberen schmalen Flächen je eine sich in Längsrichtung erstreckende Führungsschiene (15;16). Diese Führungsschienen (15;16) sind starr mit den Gegenhalterwangen (6;7) verbunden. Auf den Führungsschienen (15;16) ist ein in Längsrichtung verfahrbarer Schlitten (17) gelagert, an dessen oberhalb der Schweißfuge liegender Seitenfläche ein Laserstrahlschweißgerät (18) derart befestigt ist, daß seine Schweißoptik (19) unmittelbar über der Schweißfuge liegt. Diese ist somit durch die Gegenhalterwangen (6;7) beidseitig umschlossen. Für längere Schweißnähte kann es vorteilhaft sein, weitere Schlitten (17) und Laserstrahlschweißgeräte (18) anzuordnen.
An den Oberkanten der jeweils nach außen zeigenden Flächen der Gegenhalterwangen (6;7) sind Führungen einer Teleskopabdeckung (20) befestigt. Die Teleskopabdeckung (20) erstreckt sich über beide Gegenhalterwangen (6;7) und ist mit ihren Enden an den Ständern (4;5) befestigt. Ihre Höhe ist so gewählt, daß darunter der Schlitten (17) mit dem Laserstrahlschweißgerät (18) frei bewegbar ist.
Für bestimmte Laserausführungen ist es erforderlich, daß das Laserstrahlschweißgerät (18) seitlich aus dem Hohlraum zwischen den beiden Gegenhalterwangen (6;7) herausgeführt werden kann.
Bei einer solchen Lösungsvariante sind an den Stirnseiten der Gegenhalterwangen (6;7) schwenk- oder verschiebbare Bleche (21) angebracht, um einen lichtdichten Verschluß des Hohlraumes zu ermöglichen.
Durch die Teleskopabdeckung (20) ist zwischen den Gegenhalterwangen ein geschlossener Raum geschaffen. In diesem sind eine oder mehrere Absaugdüsen befestigt, die über Leitungen mit einem Absaug- und Reinigungsaggregat für die Rauch- und anderen Gase verbunden sind. Erfahrungsgemäß ist es aber vorteilhaft, diese Rauch- und anderen Gase an der Entstehungsstelle abzusaugen. Dazu ist das Laserstrahlschweißgerät (18) nahe seiner Schweißoptik (19) mit einer im Querschnitt ringförmigen Düse (22) umgeben, die mit einem Leitungsanschluß nach außerhalb versehen ist. Diese ringförmige Düse(22) ist in einer anderen Ausführung aus einer Anzahl einzelner Rohre (23) gebildet, die in einem gemeinsamen Ringkanal enden. An diesem ist die zentrale Absaugleitung befestigt.
Die für die Ausführung der Bewegung der einzelnen Teile erforderlichen Antriebe und deren Steuermittel sind allgemein bekannt und gehören zum Stand der Technik. Sie sind deshalb nicht näher beschrieben.

Die Wirkungsweise der Vorrichtung ist folgende:
Es sollen zwei Blechtafeln (2;3) von jeweils 1 mm und 1,5 mm Dicke an ihren geraden Kanten verschweißt werden. Die erste Blechtafel (2) wird auf den Tisch (1) aufgelegt und in bekannter Weise mit der zu verschweißenden Kante auf Schweißposition gebracht. Dort wird sie durch Druckbeaufschlagung einer Reihe der Druckmittelzylinder (9) mittels der an deren Kolbenstangen befestigten Spannbacken (10) an die Spannschiene (14) der darüber liegenden Gegenhalterwange (6) gedrückt. Die dabei aufgebrachte Spannkraft ist so groß gewählt, daß sie die Welligkeit aus der Kante der Blechtafel (2) herausdrückt und auch die Verformungskräfte beim nachfolgenden Schweißvorgang aufnimmt. Diese erheblichen Spannkräfte führen zwangsläufig zur Durchbiegung der Gegenhalterwange (6) nach oben. Diese Durchbiegung wird gleichermaßen auf die auf der Gegenhalterwange (6) befestigten Führungsleiste (15) weitergegeben. Auf diese Weise wird der Abstand zwischen Laserstrahlschweißoptik (19) und Blechoberfläche ständig konstant gehalten, wodurch eine Voraussetzung für eine qualitätsgerechte Schweißnaht geschaffen ist.
Nachdem die erste Blechtafel (2) gespannt ist, wird die zweite Blechtafel (3) auf den Tisch (1) aufgelegt und mit ihrer zu verschweißenden Kante an der entsprechenden Kante der ersten Blechtafel (2) positioniert. Nach Erreichen dieser Lage wird die andere Reihe der Druckmittelzylinder (9) beaufschlagt und drückt mit den an ihren Kolbenstangen befestigten Spannbacken (10) die Blechtafel (3) gegen die Spannschiene (14) der darüberliegenden Gegenhalterwange (7). Da die Spannschienen (14) beider Gegenhalterwangen (6;7) mit ihrer unteren Fläche in einer Ebene angeordnet sind, liegen auch die dagegen gespannten Blechoberflächen in einer genauen Ebene und erfüllen damit eine weitere Voraussetzung für eine qualitativ hochwertige Schweißnaht. Der nun beginnende Schweißvorgang erfolgt in bekannter Weise.
Da das Laserstrahlschweißgerät (18) in dem Hohlraum zwischen den beiden Gegenhalterwangen (6;7) geführt ist und dieser nach oben durch die Teleskopabdeckung (20) abgeschlossen ist, bedarf es keiner weiteren Umhausung oder eines anderen Schutzes gegen vagabundierende Laserstrahlen.
Da weiterhin die beim Schweißen entstehenden Rauch- und anderen Gase in diesem Hohlraum abgekapselt sind, bedarf es dagegen keines besonderen Schutzes, da sie aus diesem Hohlraum Laserstrahlschweißgerät ohne großen Aufwand abgesaugt werden. Die dabei vorteilhaft verwendete Ringdüse (22) erfaßt den größten Teil der Gase am Entstehungsort. Durch die dabei mögliche geringe Saugleistung entsteht auch keine Störung bei der Verwendung von Schutzgas.

## Patentansprüche

1. Vorrichtung zum Spannen und Laserstrahlschweißen von unterschiedlich dicken oder gleich dicken Dünnblechen, insbesondere für Karosserien von Kraftfahrzeugen mit einer an der Vorrichtung zum Spannen parallel zur Schweißfuge befestigten Führung, auf der ein oder mehrere Laserstrahlschweißgeräte verfahrbar gelagert sind, gekennzeichnet durch folgende Merkmale:
- zwei parallel zueinander angeordnete, feststehende, miteinander verbundene Gegenhalterwangen (6;7), die jeweils sich mit geringem Abstand gegenüberliegende Spannschienen (14) tragen,
- mehrere unterhalb der Gegenhalterwangen (6;7) angeordnete bewegliche Spannbacken (10), die jeweils einzeln, durch Druckmittelzylinder (9) angetrieben, die Spannkräfte in Richtung auf die Gegenhalterwangen (6;7) ausüben,
- eine an der oberen Schmalseite einer oder beider Gegenhalterwangen (6;7) befestigten Führung (15;16), auf der ein oder mehrere Laserstrahlschweißgeräte (18) verfahrbar gelagert sind,
- Anordnung des oder der Laserstrahlschweißgeräte (18) in dem durch beide Gegenhalterwangen (6;7) umschlossenen Hohlraum,
- Anordnung einer oder mehrerer Rauchabsaugdüsen (22;23) in dem durch beide Gegenhalterwangen (6;7) umschlossenen Hohlraum.

2. Vorrichtung zum Spannnen und Laserstrahlschweißen nach Anspruch 1,
dadurch gekennzeichnet,
daß die Spannschienen (14) und die Spannbacken (10) leicht wechselbar befestigt sind und an ihren von der Schweißfuge wegweisenden Enden keilförmig ausgebildet sind.

3. Vorrichtung zum Spannnen und Laserstrahlschweißen nach den Ansprüchen 1 und 2
dadurch gekennzeichnet,
daß die Spannschienen (14) verschleißfest und gekühlt sind.

4. Vorrichtung zum Spannnen und Laserstrahlschweißen nach Anspruch 1
dadurch gekennzeichnet,
daß an den beiden Gegenhalterwangen (6;7) eine das Laserstrahlschweißgerät (18) und den Hohlraum zwischen den Gegenhalterwangen (6;7) einschließende Abdeckung (20) angeordnet ist.

5. Vorrichtung zum Spannnen und Laserstrahlschweißen nach Anspruch 4
dadurch gekennzeichnet,
daß die Abdeckung (20) als metallische Teleskopabdeckung ausgeführt ist.

6. Vorrichtung zum Spannnen und Laserstrahlschweißen nach den Ansprüchen 1, 4 und 5
dadurch gekennzeichnet,
daß an den Stirnseiten der Gegenhalterwangen (6;7) schwenk- oder verschiebbare Bleche (21) zum Verschluß des Hohlraumes zwischen beiden Gegenhalterwangen (6;7) gelagert sind.

7. Vorrichtung zum Spannnen und Laserstrahlschweißen nach Anspruch 1,
dadurch gekennzeichnet,
daß die Rauchabsaugdüsen als eine Ringdüse (22) ausgebildet sind, die die Laserstrahlschweißoptik (19) umschließt.

8. Vorrichtung zum Spannnen und Laserstrahlschweißen nach den Ansprüchen 1 und 7,
dadurch gekennzeichnet,
daß die Ringdüse aus einer Anzahl Saugrohren (23) besteht, die ringförmig um die Laserstrahlschweißoptik (19) angeordnet sind.
